# EUROPEAN PATENT APPLICATION

(11) **EP 2 669 071 A1**
(43) Date of publication of application: **04.12.2013**
(21) Application number: 12738729.8
(22) Date of filing: 26.01.2012
(51) Int. Cl.: B29C 51/10

(54) **VACUUM MOLDING METHOD**

(30) Priority: 28.01.2011 JP 2011016688
(71) Applicant: Calsonic Kansei Corporation, Saitama-shi Saitama 331-8501 (JP)
(72) Inventor: KATOU, Shigeyuki, Saitama-shi Saitama 331-8501 (JP)
(74) Representative: Ahner, Philippe
(86) International application number: PCT/JP2012/051585
(87) International publication number: WO 2012/102316

(57) **Abstract**

Mainly, local wall thinning is prevented. The invention relates to a vacuum forming method for fabricating a resin-molded article. The vacuum forming method includes pressing a thermoplastic resin sheet 201 softened by heating into a vacuum forming mold 202 using a core mold 203 to stretch and deform the thermoplastic resin sheet 201 at the same time, and bringing the thermoplastic resin sheet 201 into intimate contact with the vacuum forming mold 202 by vacuum suction to shape the thermoplastic resin sheet 201. In the process of closing the vacuum forming mold 202 and the core mold 203, at least part of the thermoplastic resin sheet 201 is preshaped using air pressure in such a way that the at least part of the thermoplastic resin sheet 201 is locally stretched and deformed at the same time and thus brought into intimate contact with the core mold 203. Then, the thermoplastic resin sheet 201 is final-shaped by closing the vacuum forming mold 202 and the core mold 203 and performing vacuum suction through the vacuum forming mold 202.

## Description

### Technical Field

The present invention relates to a vacuum forming method.

### Background Art

Vacuum forming is performed for the fabrication of a resin-molded article (e.g., see Patent Document 1).

This vacuum forming brings a thermoplastic resin sheet softened by heating into intimate contact with a vacuum forming mold by vacuum suction to shape the thermoplastic resin sheet, and thus fabricates a resin-molded article.

Further, in a case of, for example, fabricating a resin-molded article including a deep draw portion, a thermoplastic resin sheet softened by heating is pressed into a vacuum forming mold using a core mold before the above-described vacuum suction to be stretched and deformed at the same time. Here, the deep draw portion is basically a protruding or recessed portion and is difficult to form due to an amount of projection larger than usual.

Moreover, in a case of, for example, fabricating a resin-molded article including an undercut portion, a movable plug provided in the core mold is operated during the above-described vacuum suction. Thus, the thermoplastic resin sheet is partially stretched and deformed at the same time using the movable plug to form the undercut portion. Here, the undercut portion is basically a deeply indented portion which usually makes mold release difficult.

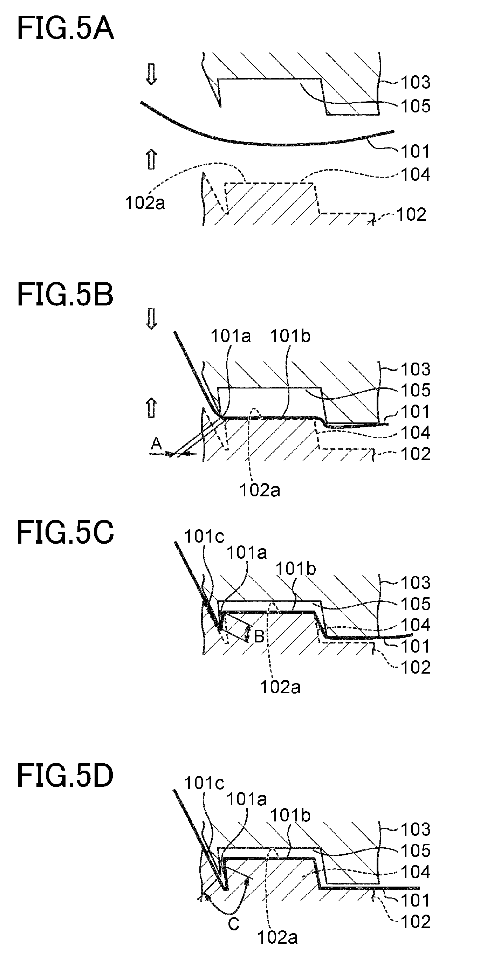

FIGS. 5A to 5D show a vacuum forming method for forming a resin-molded article including a deep draw portion. In these drawings, this vacuum forming method uses a thermoplastic resin sheet 101 softened by heating and an apparatus configuration including a vacuum forming mold 102 (or a cavity mold) and a core mold 103. The vacuum forming mold 102 and the core mold 103 are vertically arranged across the thermoplastic resin sheet 101, and are configured to be movable toward and away from each other.

The vacuum forming mold 102 has a projecting portion 104 formed therein for forming the deep draw portion, and the core mold 103 has a recessed portion 105 formed therein for forming the deep draw portion. The projecting portion 104 and the recessed portion 105 are configured to have such sizes and shapes as to be fittable to each other with a required space left therebetween.

Further, the vacuum forming mold 102 has a large number of vacuum holes 102a through which vacuum suction can be performed.

FIG. 5A illustrates a state at the start of mold closure. In this drawing, the thermoplastic resin sheet 101 softened by heating is placed between the vacuum forming mold 102 and the core mold 103 vertically separated from each other by a great distance, and is apart from the vacuum forming mold 102 and the core mold 103.

FIG. 5B illustrates a state in the process of the mold closure. In this drawing, the vacuum forming mold 102 and the core mold 103 are closer to each other than in the above state, and a top portion of the projecting portion 104 and an edge portion of the recessed portion 105 are at approximately the same level of height and are both in contact with the thermoplastic resin sheet 101. At this time, a portion 101a (gap portion, locally stretching portion) of the thermoplastic resin sheet 101 which is located between the top portion of the projecting portion 104 and the edge portion of the recessed portion 105 is in an unstretched state (length A). A portion 101b (contact portion) of the thermoplastic resin sheet 101 which is in contact with the top portion of the projecting portion 104 loses some of the heat thereof and becomes less stretchable than other portions.

FIG. 5C illustrates a state at the completion of the mold closure. In this drawing, the vacuum forming mold 102 and the core mold 103 are closest to each other. The projecting portion 104 and the recessed portion 105 are in contact with the thermoplastic resin sheet 101 while fitting to each other with a required space left therebetween. At this time, the above-described portion 101a of the thermoplastic resin sheet 101 is stretched by an amount corresponding to an amount of fitting of the projecting portion 104 with the recessed portion 105 (length B, B>A). The above-described portion 101a is out of contact with the vacuum forming mold 102 and the core mold 103, and therefore loses little of the heat thereof, though a small amount of heat is transferred from the portion 101a to portions (101b and 101c) adjacent to the portion 101a. Thus, the portion 101a is more stretchable than the adjacent portions (101b and 101c) which are in contact with the vacuum forming mold 102 and the core mold 103. It should be noted that both ends of the portion 101a are hardly displaced due to frictional resistance to the vacuum forming mold 102 and the core mold 103.

FIG. 5D shows a state (vacuum-clamping completion state) in which the thermoplastic resin sheet 101 is in intimate contact with the vacuum forming mold 102 by vacuum suction. The thermoplastic resin sheet 101 is literally shaped by being entirely brought into intimate contact with the vacuum forming mold 102. At this time, the above-described portion 101a of the thermoplastic resin sheet 101 is more stretchable than the above-described adjacent portions (101b and 101c) and therefore is greatly stretched at a stroke (length C, C>B). It should be noted, however, that since the portion 101a hardens when stretched to a certain extent or more, the length C also includes part of elongations of the adjacent portions (101b and 101c).

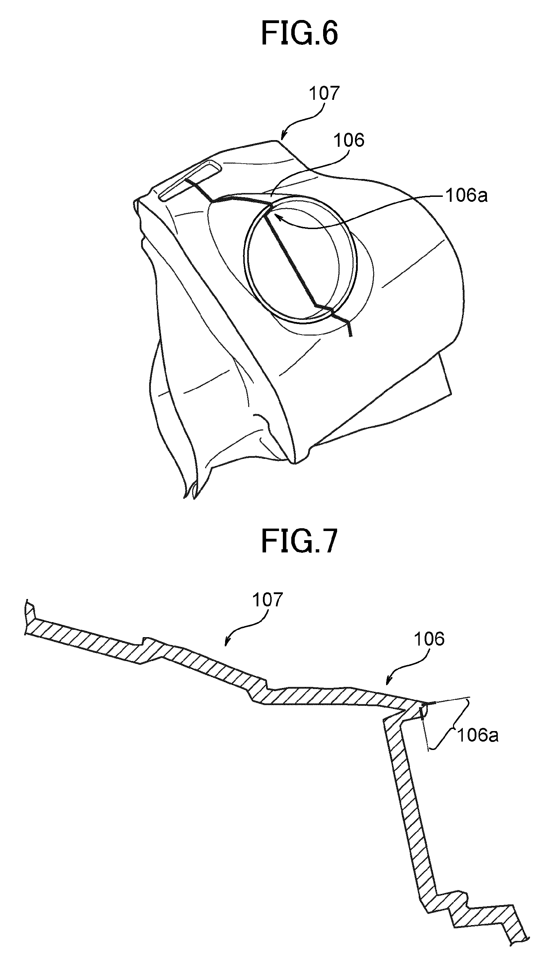

FIG. 6 is a view of an example of a resin-molded article including a deep draw portion 106 formed by the vacuum forming method of FIG. 5, and shows an air-conditioning outlet member 107 to be attached to an instrument panel which is provided in a passenger compartment of an automobile. FIG. 7 is a cross-sectional view of FIG. 6.

In this connection, a portion 106a around the tip of the deep draw portion 106 in FIG. 7 corresponds to the above-described portion 101a, and desirably has no local wall thinning as shown in FIG. 7.

### Prior Art Documents

### Patent Documents

Patent Document 1: Japanese Patent Application Publication No. 2001-121600

### Summary of the Invention

### Problems to be Solved by the Invention

However, the above-described vacuum forming method has the following problems.

Specifically, as described above, the portion 101a is locally stretched to a great extent by vacuum forming and therefore locally thin-walled.

When the thermoplastic resin sheet 101 is locally stretched to a great extent and thin-walled as described above, wrinkling and deformation marks due to local wall thinning tend to appear on the resin-molded article. Accordingly, problems may arise when postprocessing is performed on the resin-molded article, or the quality of the resin-molded article itself may decline.

Moreover, transparent portions and a decrease in color tone due to local wall thinning tend to appear on the resin-molded article. Thus, additional processing such as painting needs to be performed on thin-walled portions of the resin-molded article.

Furthermore, to prevent defective products from being formed, a thick thermoplastic resin sheet needs to be used in expectation of local wall thinning. The cost and weight of a component made of the thermoplastic resin sheet increase due to an increase in the amount of usage of resin accordingly.

### Means for Solving the Problems

In order to solve the above-described problems, an embodiment of the present invention provides a vacuum forming method for fabricating a resin-molded article. The vacuum forming method includes: pressing a thermoplastic resin sheet softened by heating into a vacuum forming mold using a core mold to stretch and deform the thermoplastic resin sheet at the same time; and bringing the thermoplastic resin sheet into intimate contact with the vacuum forming mold by vacuum suction to shape the thermoplastic resin sheet. In the process of closing the vacuum forming mold and the core mold, at least part of the thermoplastic resin sheet is preshaped using air pressure in such a way that the at least part of the thermoplastic resin sheet is locally stretched and deformed at the same time and thus brought into intimate contact with the core mold. Then, the thermoplastic resin sheet is final-shaped by closing the vacuum forming mold and the core mold and performing vacuum suction through the vacuum forming mold.

### Brief Description of the Drawings

[FIG. 1A] FIG. 1A shows a vacuum forming method according to an example for forming a resin-molded article including a deep draw portion, and illustrates a state at the start of mold closure.
[FIG. 1B] FIG.1B shows the vacuum forming method according to the example for forming the resin-molded article including the deep draw portion, and illustrates a state in the process of the mold closure.
[FIG. 1C] FIG. 1C shows the vacuum forming method according to the example for forming the resin-molded article including the deep draw portion, in which at least part of a thermoplastic resin sheet starts to be locally stretched and deformed at the same time using air pressure in the process of the mold closure.
[FIG. 1D] FIG. 1D shows the vacuum forming method according to the example for forming the resin-molded article including the deep draw portion, and illustrates a state at the completion of preshaping.
[FIG. 1E] FIG. 1E shows the vacuum forming method according to the example for forming the resin-molded article including the deep draw portion, and illustrates a state at the completion of the mold closure.
[FIG. 1F] FIG. 1F shows the vacuum forming method according to the example for forming the resin-molded article including the deep draw portion, and illustrates a vacuum-clamping completion state.
[FIG. 2] FIG. 2 shows a sample of the resin-molded article including the deep draw portion for demonstrating the vacuum forming method of FIGS. 1A-1F.
[FIG. 3] FIG. 3 is a side view showing the elongation of a thermoplastic resin sheet in preshaping performed on the sample of FIG. 2.
[FIG. 4] FIG. 4 is a graph which is made by plotting data obtained by measuring wall thicknesses of the above-described sample at a number of points in FIG. 3.
[FIG. 5A] FIG. 5A shows a vacuum forming method for forming a resin-molded article including a deep draw portion, and illustrates a state at the start of mold closure.
[FIG. 5B] FIG. 5B shows the vacuum forming method for forming the resin-molded article including the deep draw portion, and illustrates a state in the process of the mold closure.
[FIG. 5C] FIG. 5C shows the vacuum forming method for forming the resin-molded article including the deep draw portion, and illustrates a state at the completion of the mold closure.
[FIG. 5D] FIG. 5D shows the vacuum forming method for forming the resin-molded article including the deep draw portion, and illustrates a vacuum-clamping completion state.
[FIG. 6] FIG. 6 is a view of an example of the resin-molded article including the deep draw portion formed by the vacuum forming method of FIGS. 5A-5D.
[FIG. 7] FIG. 7 is a cross-sectional view of FIG. 6.

### Modes for Carrying Out the Invention

Hereinafter, an example for implementing an embodiment of the present invention will be described in detail with reference to the drawings.

### Examples

### <Configuration> A configuration will be described below.

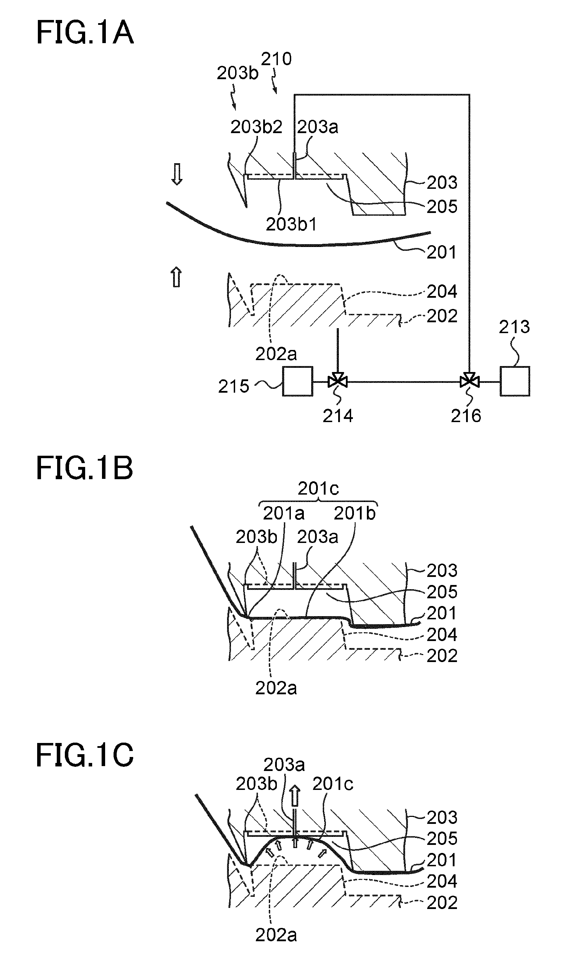

FIGS. 1A to 4 are intended to explain a vacuum forming method of this example.

The vacuum forming method of this example is as follows. Specifically, first, a thermoplastic resin sheet 201 softened by heating is pressed into a vacuum forming mold 202 using a core mold 203 to be stretched and deformed at the same time. Then, the thermoplastic resin sheet 201 is brought into intimate contact with the vacuum forming mold 202 by vacuum suction to shape the thermoplastic resin sheet 201. Thus, a resin-molded article is fabricated.

In this method, in the process of closing the vacuum forming mold 202 and the core mold 203, at least part of the thermoplastic resin sheet 201 is preshaped using air pressure in such a way that the at least part of the thermoplastic resin sheet 201 is locally stretched and deformed at the same time and thus brought into intimate contact with the core mold 203. Then, the thermoplastic resin sheet 201 is final-shaped by closing the vacuum forming mold 202 and the core mold 203 and performing vacuum suction through the vacuum forming mold 202.

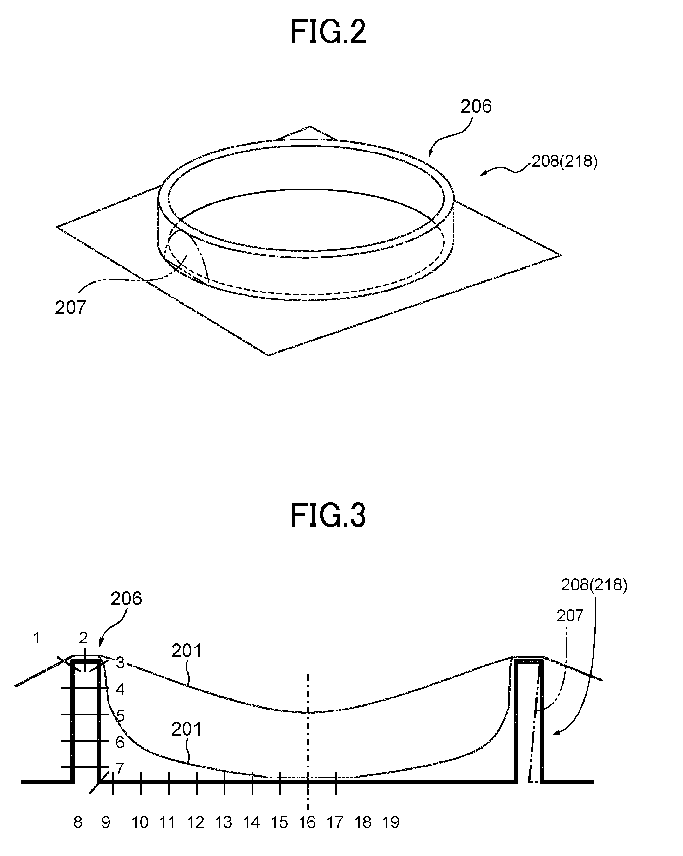

The at least part of the thermoplastic resin sheet 201 which is preshaped using air pressure essentially includes a portion (see reference numeral 201a in FIG. 1B) which would be locally stretched to a great extent and thin-walled in the case where only final shaping is performed without preshaping and a portion (see reference numeral 201b in FIG. 1B) around the foregoing portion, and is an area wider than the above-described portion which would be thin-walled. More specifically, the at least part of the thermoplastic resin sheet 201 which is preshaped includes, for example, a portion around a deep draw portion (see reference numeral 206 in FIG. 2), an undercut portion (see reference numeral 207 in FIG. 2), or the like, such as described later, in a vacuum-formed resin-molded article (see reference numeral 208 in FIG. 2). Here, preshaping may be performed on portions other than the above portion.

FIGS. 1A to 1F show a vacuum forming method according to this example for forming a resin-molded article including a deep draw portion. In this drawing, this vacuum forming method uses the thermoplastic resin sheet 201 softened by heating and a vacuum forming apparatus 210 including the vacuum forming mold 202 (or a cavity mold) and the core mold 203.

It should be noted that the thermoplastic resin sheet 201 may be configured to be feedable while being unwound from a roll, though not shown. Further, an unillustrated heating device for heating the thermoplastic resin sheet 201 may be provided at a point along a conveyance path of the thermoplastic resin sheet 201, with the vacuum forming apparatus 210, including the vacuum forming mold 202 and the core mold 203 described above, provided downstream of the heating device. It should be noted that the heating device and the vacuum forming apparatus 210 described above may be provided with unillustrated clamping devices capable of clamping part of the thermoplastic resin sheet 201.

The vacuum forming mold 202 and the core mold 203 are vertically arranged with the thermoplastic resin sheet 201 interposed therebetween, and are configured to be movable toward and away from each other so that the thermoplastic resin sheet 201 may be pressed into the vacuum forming mold 202 using the core mold 203 (mold closure may be performed).

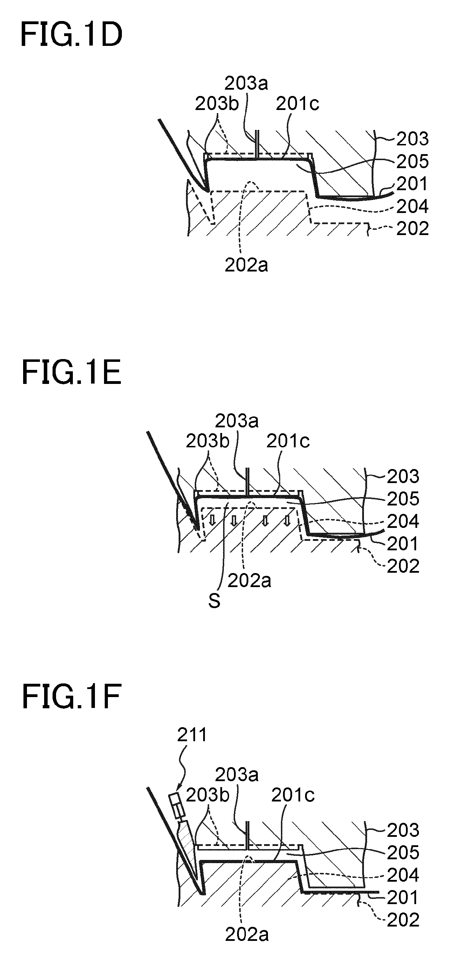

In this case, the vacuum forming mold 202 has a projecting portion 204 formed therein for forming the deep draw portion, and the core mold 203 has a recessed portion 205 formed therein for forming the deep draw portion. The projecting portion 204 and the recessed portion 205 are configured to have such sizes and shapes as to be almost fittable to each other with a required space S (see FIG. 1E) left therebetween.

It should be noted that though not shown, the reverse of the above may be employed: specifically, the vacuum forming mold 202 has the recessed portion 205 formed therein, and the core mold 203 has the projecting portion 204 formed therein. Here, the deep draw portion is basically a protruding or recessed portion which has an amount of projection larger than usual and which is therefore difficult to form.

Moreover, though not shown, in order to fabricate a resin-molded article including an undercut portion, the core mold 203 may be provided with a movable plug (see reference numeral 211 in FIG. 1F). Here, the undercut portion is basically a deeply indented portion which usually makes mold release difficult.

The vacuum forming mold 202 has a large number of vacuum holes 202a formed therein through which vacuum suction can be performed. Moreover, the core mold 203 has a vacuum hole 203a formed therein through which any one of vacuum suction and air blowing can be performed. The vacuum holes 202a and the vacuum hole 203a has a vacuum source 213 (e.g., a vacuum pump, a vacuum tank, or the like) connected thereto.

Furthermore, using the vacuum holes 202a and the vacuum hole 203a, at least part of the thermoplastic resin sheet 201 is locally stretched and deformed at the same time using air pressure so that the at least part of the thermoplastic resin sheet 201 can be brought into intimate contact with the core mold 203 (preshaping). It should be noted that the air pressure to be used is at least one of a positive pressure and a negative pressure.

To do this, for example, a pressure source 215 (e.g., a pressure pump, a pressure tank, or the like) is used such that one of the pressure source 215 and the above-described vacuum source 213 can be selectively connected to the vacuum holes 202a of the vacuum forming mold 202 via a selector valve 214 or the like.

Moreover, as needed, the vacuum hole 203a of the core mold 203 is suitable one for preshaping. In this case, one or a very small number of vacuum hole(s) 203a is/are provided at an approximately central position(s) of a bottom surface of the recessed portion 205. Further, vacuum grooves 203b are appropriately provided around an aperture(s) of the vacuum hole(s) 203a. The vacuum grooves 203b communicate with the vacuum hole 203a and extend over the entire bottom surface of the recessed portion 205. In this example, the vacuum grooves 203b include, for example, radial portions 203b1 radially extending from the aperture(s) of the vacuum hole(s) 203a in a cross-like shape or the like and a closed-loop circumferential portion 203b2 extending along a peripheral portion of the bottom surface of the recessed portion 205 to connect tip portions of the radial portions 203b1. It should be noted that in the above-described example, the core mold 203 has one or a very small number of vacuum hole(s) at an approximately central position(s) of the bottom surface thereof, but the present invention is not limited to this. The vacuum hole(s) only needs/need to allow air to be evacuated from the peripheral portion from which air between the sheet 201 and the core mold 203 is removed last. For example, the vacuum hole(s) may be provided anywhere near the center of the bottom surface of the core mold 203, or a plurality of vacuum holes may be provided on the periphery of the bottom surface of the core mold 203. Moreover, the vacuum grooves 203b are provided in accordance with the position(s) of the vacuum hole(s) 203a, but may be unnecessary in some cases.

FIG. 1A illustrates a state at the start of mold closure. In this drawing, the thermoplastic resin sheet 201 softened by heating is placed between the vacuum forming mold 202 and the core mold 203 vertically separated from each other by a great distance, and is separated from the vacuum forming mold 202 and the core mold 203.

FIG. 1B illustrates a state in the process of the mold closure. In this drawing, the vacuum forming mold 202 and the core mold 203 are closer to each other than described above, and a top portion of the projecting portion 204 and an edge portion of the recessed portion 205 are at approximately the same level of height and in contact with the thermoplastic resin sheet 201. At this time, a portion 201a (gap portion) of the thermoplastic resin sheet 201 which is located between the top portion of the projecting portion 204 and the edge portion of the recessed portion 205 is in an unstretched state. A portion 201b (contact portion) of the thermoplastic resin sheet 201 which is in contact with the top portion of the projecting portion 204 loses some of the heat thereof and becomes more resistant to stretching than other portions. Moreover, in the thermoplastic resin sheet 201, an opening portion of the recessed portion 205 is almost sealed with a portion 201c obtained by adding the portions 201a and 201b.

FIG. 1C shows a state in which at least part (in this case, the portion 201c described above) of the thermoplastic resin sheet 201 starts to be locally stretched and deformed at the same time using air pressure in the process of closing the vacuum forming mold 202 and the core mold 203. In this drawing, the relatively wide closed-loop portion 201c of the thermoplastic resin sheet 201 which seals the opening portion of the recessed portion 205 is deformed toward the inside of the recessed portion 205 in an approximately convex shape as a whole.

As the air pressure for locally stretching the at least part (in this case, the portion 201c) of the thermoplastic resin sheet 201, at least one of the following can be used: the evacuation of air from the recessed portion 205 through the vacuum hole(s) 203a of the core mold 203, and the blowing of air from the top portion of the projecting portion 204 toward the thermoplastic resin sheet 201 which is achieved by connecting the pressure source 215 to the vacuum holes 202a of the vacuum forming mold 202. The evacuation of air through the vacuum hole(s) 203a or the blowing of air using the vacuum holes 202a is preferably started slightly before the above-described state of FIG. 1B is reached, in consideration of the loss of time and the fact that the above-described portion 201b of the thermoplastic resin sheet 201 contacts the top portion of the projecting portion 204 to lose some of the heat thereof. It should be noted that in the above-described example, the pressure source 215 is connected to the vacuum holes 202a of the vacuum forming mold 202 so that air may be blown from the top portion of the projecting portion 204 toward the thermoplastic sheet 201a, but the following may be employed: in addition to the vacuum holes 202a of the vacuum forming mold 202, blowing holes (not shown) only for air blowing are provided in the top portion of the vacuum forming mold 202, and the blowing holes and the above-described pressure source 215 are connected to blow air toward the thermoplastic resin sheet 201a.

This preshaping may be performed while stopping closing the vacuum forming mold 202 and the core mold 203, or without stopping closing the molds.

FIG. 1D illustrates a state at the completion of the preshaping. In this drawing, the closed-loop portion 201c is approximately fully in intimate contact with the recessed portion 205 of the core mold 203.

In this case, first, as shown in FIG. 1C, the center of the closed-loop portion 201c comes in intimate contact with the aperture of the vacuum hole(s) 203a provided at the center of the recessed portion 205. Then, the region of intimate contact is gradually widened by the evacuation of air through the vacuum grooves 203b. Finally, a region around the bottom surface of the recessed portion 205 is reached. Thus, the above-described portion 201c of the thermoplastic resin sheet 201 is gradually deformed. The elongation of each portion of the above-described portion 201c is according to this way of deformation.

FIG. 1E illustrates a state at the completion of the mold closure. In this drawing, the vacuum forming mold 202 and the core mold 203 are closest to each other. The projecting portion 204 and the recessed portion 205 fit to each other with a required space S left therebetween, and the thermoplastic resin sheet 201 is in contact with the core mold 203. At this time, the evacuation or blowing of air for the above-described preshaping is stopped.

The above-described portion 201a of the thermoplastic resin sheet 201 is broadly stretched in advance together with the portion 201b adjacent thereto by the above-described preshaping, and is therefore thick-walled compared to that in the case where only final shaping is performed without the above-described preshaping. Also, this mold closure does not locally stretch only the above-described portion 201a to a great extent.

FIG.1F shows a state (vacuum-clamping completion state) in which the thermoplastic resin sheet 201 is in intimate contact with the vacuum forming mold 202 by vacuum suction. The thermoplastic resin sheet 201 is literally brought into intimate contact with the vacuum forming mold 202 as a whole to be final-shaped.

At this time, vacuum suction is performed through the vacuum forming mold 202 by connecting the vacuum source 213 to the vacuum holes 202a of the vacuum forming mold 202 using a selector valve 216. The start of this vacuum suction is approximately simultaneous with the completion of the mold closure or the stoppage of the evacuation or blowing of air for the above-described preshaping.

At this time, the above-described portion 201a of the thermoplastic resin sheet 201 has already have the same shape as the recessed portion 205 together with the portion 201b adjacent thereto by the preshaping. Accordingly, this final shaping does not stretch only the above-described portion 201a to a great extent.

Further, though not shown, in the case where an undercut portion exists, a movable plug (see reference numeral 211) provided in the core mold 203 is operated at this final shaping stage. It should be noted that preshaping performed as in this example changes the elongation of each portion of the thermoplastic resin sheet 201 at the time of final shaping, and increases the wall thickness of each portion. Accordingly, it is possible to reduce such a situation that an undercut portion must be formed using a movable plug.

The resin-molded article thus vacuum-formed by preshaping and final shaping is, for example, used as a covering material (see reference numeral 218 in FIG. 2) in foam molding or the like in a subsequent process.

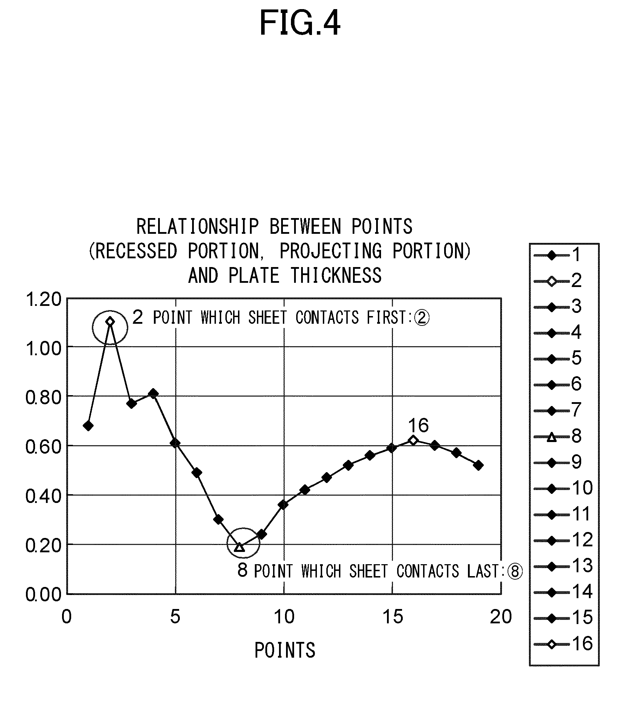

FIG. 2 shows a sample of the resin-molded article (covering material 218) including the deep draw portion 206 for demonstrating the vacuum forming method of FIGS. 1A-1F. FIG. 3 is a side view showing the elongation of the thermoplastic resin sheet 201 in preshaping performed on the sample of FIG. 2. FIG. 4 is a graph which is made by plotting data obtained by measuring wall thicknesses of the above-described sample at a number of points in FIG. 3.

Points in FIG. 3 which indicate the positions of regions of the sample correspond to the points in FIG. 4, respectively. In FIG. 3, points 1 to 3 are points in the top portion of the deep draw portion 206, points 4 to 8 are points on an inner side surface of the deep draw portion 206, and point 9 and the following points are points on the bottom surface of the deep draw portion 206. Of these, in particular, point 2 is in a central portion of the top portion of the deep draw portion 206, point 8 is in a corner portion between the inner side surface and bottom surface of the deep draw portion 206, and point 16 is in a central portion of the bottom surface of the deep draw portion 206.

Referring to FIG. 4, it has been confirmed that the sample was most thick-walled at point 2, which would be a most thin-walled point in the case where only final shaping was performed without preshaping, gradually become more thin-walled from point 2 to point 8, and gradually become more thick-walled from point 8 to point 16.

In a method in which only final shaping was performed without preshaping, even when the wall thickness of the thermoplastic resin sheet before shaping was large, a minimum thickness was not satisfied at a most thin-walled point (corresponding to point 2). On the other hand, in the method of this example in which preshaping and final shaping were performed, it was confirmed that even when the wall thickness of the thermoplastic resin sheet 201 before shaping was smaller, the minimum thickness was satisfied at point 8, which was a most thin-walled point.

<Effects> According to this example, the following effects can be obtained.

In the process of closing the vacuum forming mold 202 and the core mold 203, at least part of the thermoplastic resin sheet 201 is preshaped using air pressure in such a way that the at least part of the thermoplastic resin sheet 201 is locally stretched and deformed at the same time and thus brought into intimate contact with the core mold 203. Then, the thermoplastic resin sheet 201 is final-shaped by closing the vacuum forming mold 202 and the core mold 203 and performing vacuum suction through the vacuum forming mold 202. Accordingly, the following effects can be obtained.

Specifically, since preshaping enables part of the thermoplastic resin sheet 201 to be locally stretched in advance, a portion stretched by the above-described preshaping can be prevented from being greatly stretched at a stroke in final shaping. Accordingly, local wall thinning caused by the local elongation of the thermoplastic resin sheet 201 can be reduced. This can reduce the appearance of wrinkling and deformation marks on the formed resin article due to local wall thinning, and can reduce the appearance of transparent portions and a decrease in color tone on the formed resin article due to local wall thinning. Moreover, since the local wall thinning of the thermoplastic resin sheet 201 can be reduced, a thick thermoplastic resin sheet 201 does not need to be used in expectation of local wall thinning, and a thinner thermoplastic resin sheet 201 can be used accordingly.

While an example of this invention has been described in detail with reference to the drawings, the example is merely an illustrative example of this invention. Accordingly, this invention is not limited to the configuration of the example, and it is a matter of course that this invention includes design changes and the like made without departing from the spirit of the invention.

### Cross-Reference to Related Application

This application claims the benefit of priority from Japanese Patent Application No. 2011-016688, filed in the Japanese Patent Office on Jan. 28, 2011, the entire disclosure of which is fully incorporated herein by reference.

### Explanation of Reference Numerals

- 201: THERMOPLASTIC RESIN SHEET
- 201a: PORTION (PORTION WHICH WOULD BE THIN-WALLED)
- 201b: PORTION (ADJACENT PORTION)
- 202: VACUUM FORMING MOLD
- 202a: VACUUM HOLE
- 203: CORE MOLD
- 203a: VACUUM HOLE
- 203b: VACUUM GROOVE
- 203b1: RADIAL PORTIONS
- 203b2: CIRCUMFERENTIAL PORTION
- 204: PROJECTING PORTION
- 205: RECESSED PORTION
- 206: DEEP DRAW PORTION
- 207: UNDERCUT PORTION
- 208: FORMED RESIN ARTICLE
- 213: VACUUM SOURCE
- 215: PRESSURE SOURCE
- S: SPACE

## Claims

1. A vacuum forming method for fabricating a resin-molded article, comprising:
pressing a thermoplastic resin sheet softened by heating into a vacuum forming mold using a core mold to stretch and deform the thermoplastic resin sheet at the same time; and
bringing the thermoplastic resin sheet into intimate contact with the vacuum forming mold by vacuum suction to shape the thermoplastic resin sheet,
wherein at least part of the thermoplastic resin sheet is preshaped using air pressure in the process of closing the vacuum forming mold and the core mold in such a way that the at least part of the thermoplastic resin sheet are locally stretched and deformed at the same time and thus brought into intimate contact with the core mold, and
the thermoplastic resin sheet is then final-shaped by closing the vacuum forming mold and the core mold and performing vacuum suction through the vacuum forming mold.

2. The vacuum forming method according to claim 1, wherein the at least part of the thermoplastic resin sheet which is preshaped comprises a portion which would be locally stretched to a great extent and thin-walled if only final shaping is performed without preshaping, and a portion around the foregoing portion.

3. The vacuum forming method according to claim 2, wherein the at least part of the thermoplastic resin sheet which is preshaped comprises a portion around a deep draw portion, an undercut portion, or another portion in the vacuum-formed resin-molded article.

4. The vacuum forming method according to claim 1, wherein the vacuum forming mold has a projecting portion or a recessed portion formed therein for forming a deep draw portion, and the core mold has a recessed portion or a projecting portion formed therein for forming the deep draw portion.

5. The vacuum forming method according to claim 4, wherein the projecting portion and the recessed portion are configured to have such sizes and shapes as to be almost fittable to each other with a required space left therebetween.

6. The vacuum forming method according to claim 1, wherein the vacuum forming mold has a large number of vacuum holes formed therein and configured to allow vacuum suction to be performed therethrough, and the core mold has a vacuum hole formed therein and configured to allow any one of vacuum suction and air blowing to be performed therethrough.

7. The vacuum forming method according to claim 6, wherein a vacuum source and a pressure source are switchably connected to the vacuum holes of the vacuum forming mold, and air is blown from the vacuum holes toward the thermoplastic resin sheet in the preshaping.

8. The vacuum forming method according to claim 6, wherein the core mold is formed to be suitable for the preshaping by being provided with one or a very small number of vacuum holes at an approximately central position of a bottom surface of a recessed portion, and provided with a vacuum groove around apertures of the vacuum holes, the vacuum groove communicating with the vacuum holes and extending over the entire bottom surface of the recessed portion.

9. The vacuum forming method according to claim 8, wherein the vacuum groove includes: radial portions radially extending from the apertures of the vacuum holes in a cross-like shape or another shape; and a closed-loop circumferential portion extending along a peripheral portion of the bottom surface of the recessed portion while connecting tip portions of the radial portions.

10. The vacuum forming method according to claim 7, wherein the air pressure for locally stretching the at least part of the thermoplastic resin sheet 201 is applied by using any one of evacuation of air through the vacuum holes of the core mold, and blowing of air from a top portion of a projecting portion toward the thermoplastic resin sheet by connecting the pressure source to the vacuum holes or a blowing hole of the vacuum forming mold.

11. The vacuum forming method according to claim 10, wherein the any one of the evacuation of air through the vacuum holes and the blowing of air using the vacuum holes is started slightly before the top portion of the projecting portion and an edge portion of a recessed portion provided in the vacuum forming mold and the core mold come to approximately the same level of height and contact the thermoplastic resin sheet.

12. The vacuum forming method according to claim 1, wherein the preshaping is performed while stopping closing the vacuum forming mold and the core mold or without stopping closing the molds.

13. The vacuum forming method according to claim 11, wherein any one of the evacuation and blowing of air for the preshaping is stopped when the vacuum forming mold and the core mold come closest to each other with the projecting portion and the recessed portion fitting to each other with a required space left therebetween upon completion of closing the molds.

14. The vacuum forming method according to claim 1, wherein start of the vacuum suction for the final shaping through the vacuum forming mold is approximately simultaneous with any one of completion of closing the molds and stoppage of any one of the evacuation and blowing of air for the preshaping.
